# EUROPEAN PATENT SPECIFICATION

(11) **EP 3 454 477 B1**
(45) Date of publication and mention of the grant of the patent: **18.12.2024**
(21) Application number: 18193816.8
(22) Date of filing: 11.09.2018
(51) Int. Cl.: H04B 7/08, H04L 25/02, H04B 17/345, H04B 7/06

(54) **INTERFERENCE MEASUREMENTS IN NEW RADIO SYSTEMS**
INTERFERENZMESSUNGEN IN NEUEN FUNKSYSTEMEN
MESURES D'INTERFÉRENCE DANS DE NOUVEAUX SYSTÈMES RADIO

(30) Priority: 11.09.2017 WO PCT/CN2017/101239; 09.11.2017 US 201762583883 P
(43) Date of publication of application: 13.03.2019
(73) Proprietor: Apple Inc., Cupertino, CA 95014 (US)
(72) Inventor: Wang, Guotong, Santa Clara, CA 95054 (US); Davydov, Alexei, Santa Clara, CA 95054 (US); Zhang, Yushu, Santa Clara, CA 95054 (US)
(74) Representative: Barton, Russell Glen

(56) References cited:
- INTEL CORPORATION: "On interference measurement for NR", vol. RAN WG1, no. Spokane, USA; 20170116 - 20170120, 16 January 2017 (2017-01-16), XP051207874, Retrieved from the Internet <URL:http://www.3gpp.org/ftp/Meetings_3GPP_SYNC/RAN1/Docs/> [retrieved on 20170116]
- SAMSUNG: "Discussion on beam indication for PDSCH", vol. RAN WG1, no. Prague, Czech; 20170621 - 20170625, 20 August 2017 (2017-08-20), XP051317288, Retrieved from the Internet <URL:http://www.3gpp.org/ftp/Meetings_3GPP_SYNC/RAN1/Docs/> [retrieved on 20170820]
- INTEL CORPORATION: "Remaining Issues on Interference Measurement for CSI", vol. RAN WG1, no. Reno, USA; 20171127 - 20171201, 18 November 2017 (2017-11-18), XP051369750, Retrieved from the Internet <URL:http://www.3gpp.org/ftp/tsg%5Fran/WG1%5FRL1/TSGR1%5F91/Docs/> [retrieved on 20171118]

## Description

### FIELD

This invention relates to the field of wireless communications. Some embodiments of the invention generally relate to the measurement of interference and/or channel quality. The embodiments discussed herein may be readily used in a 3GPP 5^{th} Generation (5G) or New Radio (NR) mobile communication system.

### BACKGROUND

Mobile communication has evolved significantly from early voice systems to today's highly sophisticated integrated communication platform. The next generation wireless communication system, 3GPP 5^{th} Generation (5G) or New Radio (NR) will provide access to information and sharing of data anywhere, anytime by various users and applications. NR is expected to be a unified network/system that target to meet vastly different and sometime conflicting performance dimensions and services. Such diverse multi-dimensional requirements are driven by different services and applications. In general, NR will evolve based on 3GPP LTE-Advanced with additional potential new Radio Access Technologies (RATs) to enrich people lives with better, simple and seamless wireless connectivity solutions. NR will enable everything connected by wireless and deliver fast, rich contents and services.

For NR system, high frequency band communication has attracted significantly attention from the industry, since it can provide wider bandwidth to support the future integrated communication system. The beam forming is an important technology for the implementation of high frequency band system: The beam forming gain can compensate the severe path loss caused by atmospheric attenuation, improve the signal to noise ratio (SNR), and enlarge the coverage area. By aligning the transmission beam to the target UE, radiated energy is focused for higher energy efficiency, and mutual UE interference is suppressed.

3GPP Tdoc. R1-1700337, "On interference measurement for NR", 3GPP TSG RAN WG1 NR AH, January 2017, provides some discussion regarding the relationship between IMR transmission and CSI reporting and other aspects on IMR design for NR. 3GPP Tdoc. R1-1700337 suggests to support UE Rx beam indication for IMR by reusing the Rx configuration of the corresponding CSI-RS, i.e. for CSI-RS resource and IMR associated with a given CSI (or CSI process), so that a UE can apply the same Rx beam derived based on CSI-RS.

3GPP Tdoc. R1-1714513, "Discussion on beam indication for PDSCH", 3GPP TSG RAN WG1 Meeting #90, June 2017 discusses options for indicating a Rx beam to the UE for transmission on the PDSCH. It is proposed that the DCI could provide a Rx beam indication for the PDSCH.

### SUMMARY

The claimed invention is defined by the independent claims. Advantageous embodiments are defined in the dependent claims.

### BRIEF DESCRIPTION OF THE DRAWINGS

The following detailed description refers to the accompanying drawings. The same reference numbers may be used in different drawings to identify the same or similar elements.
- **Fig. 1**: shows an example of different CSI-IM configurations, where the RE for CSI-IM have different frequency offsets;
- **Fig. 2**: shows an example time offset between the last symbol of the PDCCH carrying the triggering DC activating an aperiodic CSI-IM and the configured CSI-IM resource;
- **Fig. 3**: shows an example highlighting the difference between the use of RI inheritance according to an embodiment, and non-use of RI inheritance in case different measurement subset are configured;
- **Fig. 4**: shows an example flow chart of a process of a UE determining the CQI/PMI/RI for different measurements subsets according to an embodiment;
- **Fig. 5**: shows an architecture of a system of a network in accordance with some embodiments,
- **Fig. 6**: shows another architecture of a system of a network in accordance with some embodiments,
- **Fig. 7**: shows example components of a device 700 in accordance with some embodiments.,
- **Fig. 8**: shows example interfaces of baseband circuitry 704 comprised by device 700 in accordance with some embodiments,
- **Fig. 9**: shows a control plane protocol stack of the device 700 in accordance with some embodiments,
- **Fig. 10**: shows a user plane protocol stack of the device 700 in accordance with some embodiments,
- **Fig. 11**: shows a block diagram illustrating components, according to some example embodiments, able to read instructions from a machine-readable or computer-readable medium (e.g., a non-transitory machine-readable storage medium) and perform any one or more of the methodologies discussed herein.

### DETAILED DESCRIPTION

In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

In the 5G NR systems, beam forming will be used at both the transmission reception point (TRP) side (e.g. next generation NodeB (gNB or gNodeB)) and the UE side. The UE and the TRP should maintain the best several TRP beams and UE beams for communication and measurement. The pair of TRP transmission beam and UE reception beam changes dynamically due to the channel variation.

### Interference Measurements

In order to facilitate interference measurements, the network (e.g. TRP) may configure one or more interference measurement resources (IMR) to allow interference measurements on the predetermined resources configured for the user equipment (UE). The interference measurment could be based on the periodic zero-power channel state information-reference signal (ZP CSI-RS), as used in 3GPP 4^{th} Generation (4G) systems. The IMR should allow the UE to capture the interference characteristics. As will be outlined in more detail below, in 3GPP NR, the ZP CSI-RS may be used, for example, for inter-cell interference measurement (e.g. inter-TRP interference). For interference measuring, ZP CSI-RS can be transmitted from a TRP on the on the specified resource elements (REs) in an interference measurement (IM) configuration. Consequently, the UE can utilize the corresponding REs to estimate the inter-cell interference which corresponds to physical downlink shared channel (PDSCH) transmission of the neighboring transmission reception points (TRPs). The considered approach is suitable for the conventional inter-cell interference measurement and it causes relatively low overhead.

Periodic IM resource transmission using ZP CSI-RS transmitted on an IM resource for intra-cell interference measurement may be inefficient in case of Multi-User (MU)-Multiple Input Multiple Output (MIMO). For example, due to dynamic scheduling decision for MU-MIMO, the intra-cell interference realization for CSI could be dynamic. For one UE which is measuring interference on one ZP CSI-RS based resource, some other UEs without data transmission at the instance of interference measurement might send data at the instance of scheduled transmission. It leads to the interference which is not reflected on the result of interference measurement. In this case, the interference measurement based on the semi-statically configured periodic ZP CSI-RS may not be helpful enough to accurately estimate intra-cell interference from different UEs. Thus, the corresponding CSI reporting may not be able to reflect the real channel condition, which degrades the performance of link adaptation.

In order to do link adaptation, it is important to estimate the interference so that the CSI can be calculated accurately. In general, in the embodiments of the first aspect support, periodic, semi-persistent, and/or aperiodic IM resource transmission from the TRP (e.g. gNB) may be configured in an IM configuration. The IM resource (IMR) is for example based on channel state information reference signal (CSI-RS). In some embodiments, CSI-RS may be a zero power CSI-RS (ZP CSI-RS), or non-zero power CSI-RS (NZP CSI-RS). The TRP may transmit either one of the two or both kinds of CSI-RS on the configured CSI-RS based IM resource.

In embodiments of the first aspect, ZP CSI-RS could be used to obtain the inter-TRP interference. In other embodiments of the first aspect, which may be specifically useful for the MU-MIMO case, NZP CSI-RS could be used to perform interference measurement to obtain the intra-TRP interference information.

In general, the IMR configured by the network could be aperiodic, periodic or semi-persistent, as noted above. For periodic/semi-persistent CSI-RS based IMR (CSI-IM), the periodicity could be smaller than 5 slots, for example, 1 slot, especially in the scenario with burst interference. For the CSI-RS based IM configuration, the TRP (e.g. gNB) could indicate the IM resource location in both time domain and frequency domain.

In principle, and in some embodiments, the CSI-IM may be frequency division multiplexed (FDMed) with synchronization signal block (SSB) or NZP CSI-RS, if the CSI-RS based IM resource and SSB/NZP CSI-RS (used for channel measurement) are quasi co-located (QCLed). This may allow reducing the reception (Rx) beam switching. Considering the DCI decoding delay and UE Rx beam switching delay, if the time offset between DCI and a CSI-RS based IM resource is smaller than a certain threshold, the UE could apply a default or pre-configured Rx beam for interference measurement (i.e. apply a default or pre-configured spatial/QCL assumption for the Rx beam).

### CSI-RS based IM Configuration

For periodic ZP CSI-RS based IMR, the minimum periodicity in 3GPP LTE is 5 subframes. In a 5G NR based system, the 5ms periodicity could limit the accuracy of interference measurement, especially in the scenarios with burst interference. Due to the beam forming at both the TRP (e.g. gNB) and UE side, the burst characteristics of the neighbor cell interference could be more severe. Accordingly, it is proposed to support CSI-RS based IMR transmission with smaller periodicity than 5ms. For example, the CSI-RS based IMR could be configured every 1 slot. This may provide more robust and accurate interference measurement for CSI. The periodicity of 1 slot for CSI-RS based IMR transmission could be similar with interference measurement based on CRS which is present in every slot. The transmission periodicity of 1 slot could be useful for interference measurement in the scenario with burst interference. The CSI-RS based IMR transmission slot configuration is shown as in Table 1, where the parameter I is configured via higher layer signaling.

**Table 1 CSI-RS based IMR Slot Configuration**

| CSI-RS based MR slot configuration, I | CSI-RS based IMR periodicity in slots | CSI-RS based IMR offset in slots |
|---|---|---|
| 0 | 1 | 0 |
| 1 - 5 | 5 | I-1 |
| 6 - 15 | 10 | I-6 |
| 16 - 35 | 20 | I-16 |
| 36 - 75 | 40 | I-36 |
| 76 - 155 | 80 | I-76 |
| ... | ... | ... |

In embodiments of this disclosure, the CSI-RS based IMR configuration indicates the IMR position in both time domain and frequency domain. The IMR resource configuration may be configured by the TRP (e.g. gNB) using some control signaling (e.g. RRC signaling). In the time domain, the TRP (e.g. gNB) may for example indicate over which OFDM symbol(s) the IMR is transmitted to identify the relevant OFDM symbol(s) for measurement in a given slot. In the frequency domain, the TRP (e.g. gNB) may for example indicate the frequency offset within one physical resource block (PRB). Put differently the TRP (e.g. gNB) may indicate over which subcarriers (corresponding to REs) the CSI-RS based IMR is transmitted. For RE pattern (4, 1), a 2-bits bitmap could be used to indicate the frequency offset. And for RE pattern (2, 2), a 3-bits bitmap may be required to indicate the frequency offset.

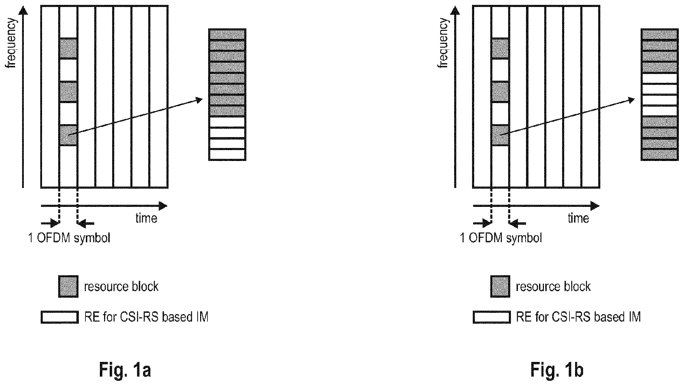

Fig. 1 shows an example of different CSI-IM configurations, where the RE for CSI-RS based IMR have different frequency offsets. In Fig. 1a and Fig. 1b there are 4 REs within the PRB configured for CSI-RS based IMR, but they have different offsets in the frequency domain.

Interference measurements could be applied to a sub-band or partial band only. Thus, optionally, the CSI-RS based IMR configuration may further indicate which sub-band or partial band is applied/to be used for the interference measurement by the UE. Further optionally, the frequency granularity may also be indicated by the TRP (e.g. gNB) in the CSI-RS based IMR configuration. For example, the CSI-RS based IMR may transmitted every N PRBs, where N is configurable and may be indicated in the CSI-RS based IMR configuration.

If the CSI-RS based IMR is QCLed with a SSB, then the CSI-RS and synchronization signal block (SSB) could be FDMed, so that the UE can receive the SSB and CSI-RS based IMR with the same Rx beam. This way, the UE could measure both channel and interference in single shot so that the number of beam switching at the UE side could be reduced for CSI measurement. Similarly, the CSI-RS based IMR could be FDMed with NZP CSI-RS, if the CSI-RS based IMR and NZP CSI-RS are QCLed. In this way, the UE could measure both channel and interference in single shot so that the number of beam switching at the UE side could be reduced for CSI measurement

For interference measurement (including ZP CSI-RS and NZP CSI-RS based interference measurement), the UE assumes that the same Rx beam should be used for interference measurement as the Rx beam indicated by the TRP (e.g. gNB) for the channel measurements.

For aperiodic CSI-RS based IMR, the UE Rx beam may be indicated by the TRP (e.g. gNB) to the UE, for example, via RRC signaling. Since the IM may be triggered over DCI, there is typically some processing delay for the DCI at the UE. Also taking into account the UE Rx beam sweeping delay, the UE could apply the Rx beam for interference measurement as indicated by the DCI, if the time offset between the DCI and CSI-RS based IMR is larger than the processing and beam sweeping delay. The processing delay (sometimes also referred to as decoding delay or scheduling delay) and the beam sweeping delay could be viewed as a threshold which is up to the UE capability. If the time offset is smaller than the threshold, the UE could apply a default/pre-configured/pre-defined/rule-based spatial assumption for interference measurement.

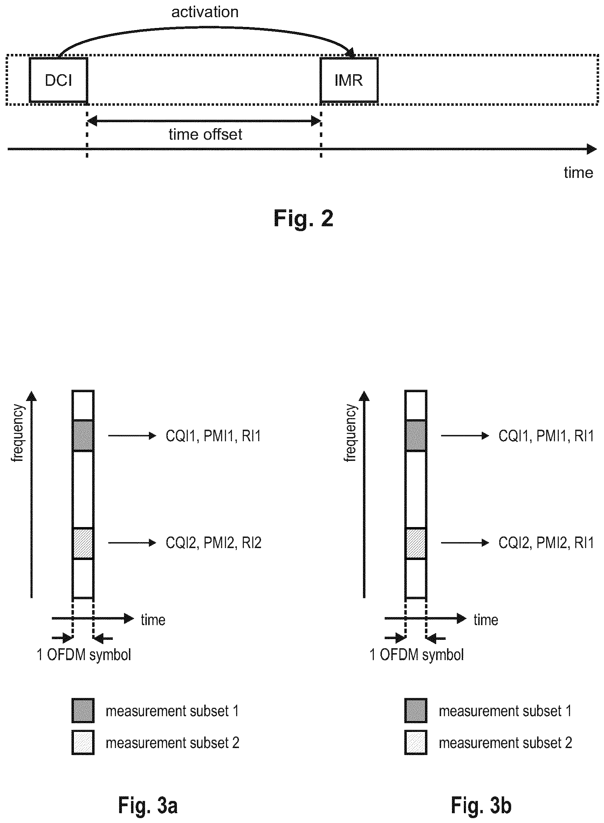

In some embodiments that complies with the first aspect of this disclosure, for interference measurement, e.g. in an aperiodic CSI-IM configuration, the UE assumes the same Rx beam is to be used for both interference measurement and channel measurement. If the time offset between the DCI and CSI-RS based IMR is smaller than certain threshold, the UE apply a default/pre-configured/pre-defined/rule-based spatial assumption (Rx beam) for interference measurement (i.e. QCL Type-D). If the time offset is larger than certain threshold, the UE could apply the Rx beam as indicated for interference measurement. For example, as show in Fig. 2, if the time offset (scheduling offset) between the last symbol of the PDCCH carrying the triggering DCI (i.e. the DCI triggering aperiodic measurement) and the first symbol of the aperiodic ZP or NZP CSI-RS) is smaller than a threshold the UE applies a default QCL assumption.

### Interference Measurement Restriction/Subset

In the 5G NR system, beam forming will be used at both the TRP side and the UE side. The UE and the TRP should maintain the best several TRP beams and UE beams for communication and measurement. The pair of TRP transmission beam and UE reception beam changes dynamically due to the channel variation.

In 5G NR, multiple use cases should be supported in a Frequency Division Duplexing (FDD) manner in NR, e.g., enhanced Mobile Broadband (eMBB), Ultra-Reliable Low Latency Communications (URLLC), and massive machine-type communications (mMTC). Consequently, different use cases occupy different parts of the whole frequency band. Thus, it may be beneficial for 5G NR to adopt interference measurement restriction or subset in the frequency domain. Thus, according to the second aspect, measurement restriction(s) or measurement subset(s) is introduced in frequency domain for interference measurements. According to an embodiment of this second aspect, the measurement restriction or measurement subset indicates over which partial band or physical resource block (PRB) the UE should perform interference measurement. Thus, the UE could measure the interference in specific part(s) of the wideband (only), which is/are assigned to the UE.

### RI inheritance

When multiple subsets are configured for interference measurement, the UE may - in one embodiment - report CSI for each measurement subset. When calculating RI information, different RI value could thus be obtained for different partial band part. For example, if two measurement subsets are configured for the UE, then for the first subset the RI value may be RI₁, and for the second subset, the RI value may be RI₂. Note that the values for channel quality indicator (CQI) and Precoder Matrix Indicator (PMI) may be calculated by the UE based on the RI for each measurement subset and may be reported in the CSI report along with the RI of the given measurement subset.

Different RI over frequency domain could confusion to the gNB scheduling. Furthermore, a per measurement subset report will also result in an increase of the CSI reported by the UE. It would be advantageous to reduce the impact on CSI reporting, even in scenarios, where interference measurement restriction or interference measurement subset(s) are defined in the frequency domain.

Therefore, in a further embodiment of this second aspect, it is proposed that, if multiple subsets are configured for interference measurement, the rank indicator (RI) is the same among the subsets. To put it different, in this embodiment the RI is the same among the subset. The UE may for example report one RI with the CSI report which is applicable to all measurement subsets that are configured by the TRP (e.g. gNB) and which are reported on by the UE.

For example, the RI could be inherited from one subset. If different RI were calculated over different subsets in frequency domain, this may otherwise cause confusion to the gNB scheduling. Fig. 3 shows an example highlighting the difference between the use of RI inheritance according to an embodiment (Fig. 3b), and non-use of RI inheritance in case different measurement subset (Fig. 3a), are configured.

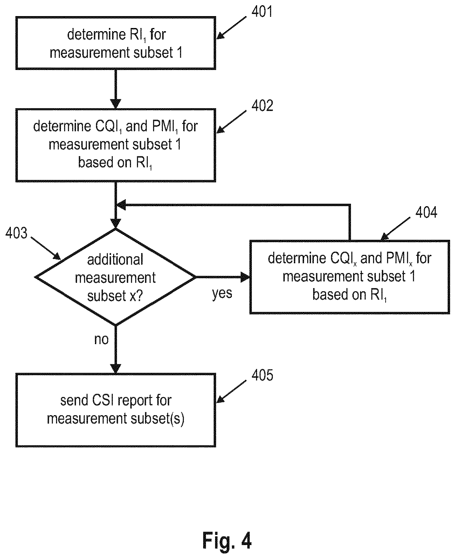

For example, in one embodiment, CQI/ PMI/RI are calculated by the UE for the first measurement subset. Fig. 4 shows a process of a UE determining the CQI/PMI/RI for different measurements subsets according to an embodiment. The UE first determines 401 the RI for the first measurement subset (measurement subset 1). It is assumed for explanation only that the RI value for this first measurement subset is RI₁. The UE may then determine 402 CQI and PMI for the first measurement subset. If there exists more than one measurement subset (step 403, yes), the UE determines 404 CQI and PMI for the second subset. For the second measurement subset, the RI is inherited from the first measurement subset, e.g., the RI value for the second measurement subset is also RI₁. Further, the UE could calculate the CQI/PMI for the second subset based on RI₁. The determination of CQI and PMI is performed for all configured measurement subsets (if more than two) using the rank indicator on RI₁ of the first measurement subset in a similar fashion.

When CQI/PMI (blocks 402, 404) and the common RI (block 401) have been determined, the UE may send 405 a CSI report to the TRP (e.g. gNB). Note that the CQI/PMI may not need to be determined and reported for all measurement subsets, but the TRP (e.g. gNB) may request CSI for only some of the measurement subsets.

Note that in the example process of Fig. 4, the RI has been determined 401 by the UE for the first measurement subset (as a "common RI"), and is then used in the determination of CQI and PMI of all measurement subsets. There may also be different options on how to calculate the RI value that is to be applied to all measurement subsets. The following options may be used to determine the common RI value:
- Option 1: common RI is calculated by a particular measurement subset which can be predefined, e.g., the first subset, or configured by higher layer signaling or DCI.
- Option 2: common RI is calculated by the average interference from all subsets.
- Option 3: common RI is determined by all RIs in all subsets, e.g., common RI is the smallest RI of all RIs.

In yet another embodiment according to the second aspect, RI/PMI/CQI for each subset can be reported to the TRP (e.g. gNB) for frequency selective precoding. Whether a common RI or multiple RIs can be reported should be pre-defined or configured by higher layer signaling or determined by the bandwidth for a subset. For example, the RI for each bandwidth part (BWP) can be reported independently.

### Aperiodic IMR configuration

As noted in several examples herein above, aperiodic IM can be triggered by DCI. The configuration of an aperiodic IMR could be through higher layer signaling, e.g., Radio Resource Control (RRC) signaling/messages. Optionally, a media access control (MAC) control element (CE) could be further used to select a set of candidate IMR among the resource configured by RRC. For example, through RRC signaling, the gNB could configure - for example - 8 CSI-RS resources for interference measurement. A MAC CE could select 4 of the 8 configured CSI-RS resources as candidate to be monitored for the UE for measurements. A DCI will trigger to activate one IM resource configuration for interference measurement.

The triggering of aperiodic IM could be optionally combined with the uplink grant for CSI reporting. For example, the TRP (e.g. gNB) could signal DCI (on PDCCH) that contains an uplink resource assignment for the aperiodic CSI report. The DCI may include a field that triggers or activates an aperiodic CSI report based on selected ones of the configured CSI-RS resources for IM. Due to the latency of control information processing, time offset should be considered between the DCI and when the IMR is present.

If the IMR indicates that the UE should use a different Rx beam with the current one, there should be more delay to be take into account due to the UE Rx beam switching. The offset could be preconfigured or up to UE capability.

In some embodiments, besides the resource information of the IMR configuration, the IMR configuration could also indicate the measurement restriction/subset information. The measurement restriction/subset information may indicate whether the interference measurement should be applied to subset in frequency domain.

### Interference emulation

Generally, interference measurements can be performed using ZP and NZP CSI-RS, for example for a given IMR configuration, or NZP CSI-RS could also be used (in the alternative or in addition to CSI-IM) for interference measurement. For NZP CSI-RS based interference measurement, there could be two ways for interference measurement, one is using colliding NZP CSI-RS (e.g. the TRP(s) transmit NZP CSI-RSs to different UEs on the same resources), and the other one is interference emulation.

In an embodiment, interference emulation is used. The UE may feedback interference information as many CQI combinations as possible. However, the signaling overhead may an issue. Therefore, in another embodiment, the UE reports a single CQI covering all the configured NZP CSI-RS. For example, if the gNB configures 8 NZP CSI-RS resources, the UE will measure interference from all the NZP CSI-RS.

Another possibility is that the UE performs blind detection. If the interference from another user is negligible, it will be ignored. Only the interference of other users which is higher than certain threshold will be considered for CQI calculation. When reporting the CQI, the UE should also indicate to the gNB about the combination (UE pairing) considered for CQI calculation.

### UE Rx beam for interference measurement

Depending on the Rx beam at the UE, the interference characteristics experienced by UE receiver could be different. Therefore, in one embodiment, it is indicated which Rx beam the UE should use for interference measurement. Since SSB could be used for beam management, the UE Rx beam indication for interference measurement could be QCLed with CSI-RS or SSB. In the scenario of carrier aggregation, if different sub-band subsets (component carriers) are configured belonging to different TRPs, the IMR configuration could indicate which Rx beam can be used for different sub-band subsets.

In an embodiment, the UE Rx beam should be indicated for interference measurement. The UE Rx beam indication may be for example indicated to the UE be together with IMR. The indication could be QCLed with CSI-RS or SSB. Hence, some ZP CSI-RS or NZP CSI-RS for interference measurement can be QCLed with CSI-RS or SSB, which can be pre-defined or configured by higher layer signaling or DCI. In the scenario of carrier aggregation, if different sub-band subsets (component carrier) are configured belonging to different TRPs, the IMR configuration could indicate which Rx beam can be used for different sub-band subsets.

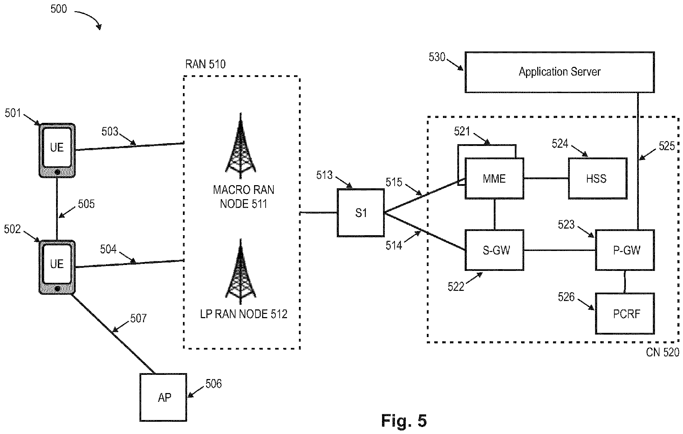

Fig. 5 illustrates an architecture of a system 500 of a network in accordance with some embodiments. The system 500 is shown to include a user equipment (UE) 501 and a UE 502. The UEs 501 and 502 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 501 and 502 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 501 and 502 may be configured to connect, e.g., communicatively couple, with a radio access network (RAN) 510 - the RAN 510 may be, for example, an Evolved Universal Mobile Telecommunications System (UMTS) Terrestrial Radio Access Network (E-UTRAN), a NextGen RAN (NG RAN), or some other type of RAN. The UEs 501 and 502 utilize connections 503 and 504, respectively, each of which comprises a physical communications interface or layer (discussed in further detail below); in this example, the connections 503 and 504 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 501 and 502 may further directly exchange communication data via a ProSe interface 505. The ProSe interface 505 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 502 is shown to be configured to access an access point (AP) 506 via connection 507. The connection 507 can comprise a local wireless connection, such as a connection consistent with any IEEE 802.11 protocol, wherein the AP 506 would comprise a wireless fidelity (WiFi^{®}) router. In this example, the AP 506 is shown to be connected to the Internet without connecting to the core network of the wireless system (described in further detail below).

The RAN 510 can include one or more access nodes that enable the connections 503 and 504. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 510 may include one or more RAN nodes for providing macrocells, e.g., macro RAN node 511, and one or more RAN nodes for providing femtocells or picocells (e.g., cells having smaller coverage areas, smaller user capacity, or higher bandwidth compared to macrocells), e.g., low power (LP) RAN node 512.

Any of the RAN nodes 511 and 512 can terminate the air interface protocol and can be the first point of contact for the UEs 501 and 502. In some embodiments, any of the RAN nodes 511 and 512 can fulfill various logical functions for the RAN 510 including, but not limited to, radio network controller (RNC) functions such as radio bearer management, uplink and downlink dynamic radio resource management and data packet scheduling, and mobility management.

In accordance with some embodiments, the UEs 501 and 502 can be configured to communicate using Orthogonal Frequency-Division Multiplexing (OFDM) communication signals with each other or with any of the RAN nodes 511 and 512 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 511 and 512 to the UEs 501 and 502, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 501 and 502. The physical downlink control channel (PDCCH) may carry information about the transport format and resource allocations related to the PDSCH channel, among other things. It may also inform the UEs 501 and 502 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 511 and 512 based on channel quality information fed back from any of the UEs 501 and 502. The downlink resource assignment information may be sent on the PDCCH used for (e.g., assigned to) each of the UEs 501 and 502.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 510 is shown to be communicatively coupled to a core network (CN) 520 -via an S1 interface 513. In embodiments, the CN 520 may be an evolved packet core (EPC) network, a NextGen Packet Core (NPC) network, or some other type of CN. In this embodiment the S1 interface 513 is split into two parts: the S1-U interface 514, which carries traffic data between the RAN nodes 511 and 512 and the serving gateway (S-GW) 522, and the S1-mobility management entity (MME) interface 515, which is a signaling interface between the RAN nodes 511 and 512 and MMEs 521.

In this embodiment, the CN 520 comprises the MMEs 521, the S-GW 522, the Packet Data Network (PDN) Gateway (P-GW) 523, and a home subscriber server (HSS) 524. The MMEs 521 may be similar in function to the control plane of legacy Serving General Packet Radio Service (GPRS) Support Nodes (SGSN). The MMEs 521 may manage mobility aspects in access such as gateway selection and tracking area list management. The HSS 524 may comprise a database for network users, including subscription-related information to support the network entities' handling of communication sessions. The CN 520 may comprise one or several HSSs 524, depending on the number of mobile subscribers, on the capacity of the equipment, on the organization of the network, etc. For example, the HSS 524 can provide support for routing/roaming, authentication, authorization, naming/addressing resolution, location dependencies, etc.

The S-GW 522 may terminate the S1 interface 513 towards the RAN 510, and routes data packets between the RAN 510 and the CN 520. In addition, the S-GW 522 may be a local mobility anchor point for inter-RAN node handovers and also may provide an anchor for inter-3GPP mobility. Other responsibilities may include lawful intercept, charging, and some policy enforcement.

The P-GW 523 may terminate an SGi interface toward a PDN. The P-GW 523 may route data packets between the EPC network 523 and external networks such as a network including the application server 530 (alternatively referred to as application function (AF)) via an Internet Protocol (IP) interface 525. Generally, the application server 530 may be an element offering applications that use IP bearer resources with the core network (e.g., UMTS Packet Services (PS) domain, LTE PS data services, etc.). In this embodiment, the P-GW 523 is shown to be communicatively coupled to an application server 530 via an IP communications interface 525. The application server 530 can also be configured to support one or more communication services (e.g., Voice-over-Internet Protocol (VoIP) sessions, PTT sessions, group communication sessions, social networking services, etc.) for the UEs 501 and 502 via the CN 520.

The P-GW 523 may further be a node for policy enforcement and charging data collection. Policy and Charging Enforcement Function (PCRF) 526 is the policy and charging control element of the CN 520. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 526 may be communicatively coupled to the application server 530 via the P-GW 523. The application server 530 may signal the PCRF 526 to indicate a new service flow and select the appropriate Quality of Service (QoS) and charging parameters. The PCRF 526 may provision this rule into a Policy and Charging Enforcement Function (PCEF) (not shown) with the appropriate traffic flow template (TFT) and QoS class of identifier (QCI), which commences the QoS and charging as specified by the application server 530.

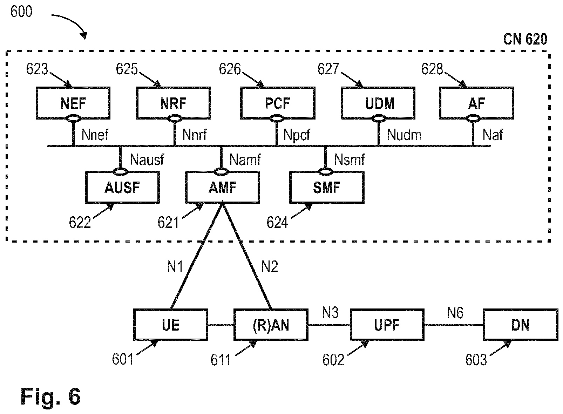

Fig. 6 illustrates an architecture of a system 600 of a network in accordance with some embodiments. The system 600 is shown to include a UE 601, which may be the same or similar to UEs 501 and 502 discussed previously; a RAN node 611, which may be the same or similar to RAN nodes 511 and 512 discussed previously; a User Plane Function (UPF) 602; a Data network (DN) 603, which may be, for example, operator services, Internet access or 3rd party services; and a 5G Core Network (5GC or CN) 620.

The CN 620 may include an Authentication Server Function (AUSF) 622; a Core Access and Mobility Management Function (AMF) 621; a Session Management Function (SMF) 624; a Network Exposure Function (NEF) 623; a Policy Control function (PCF) 626; a Network Function (NF) Repository Function (NRF) 625; a Unified Data Management (UDM) 627; and an Application Function (AF) 628. The CN 620 may also include other elements that are not shown, such as a Structured Data Storage network function (SDSF), an Unstructured Data Storage network function (UDSF), and the like.

The UPF 602 may act as an anchor point for intra-RAT and inter-RAT mobility, an external PDU session point of interconnect to DN 603, and a branching point to support multi-homed PDU session. The UPF 602 may also perform packet routing and forwarding, packet inspection, enforce user plane part of policy rules, lawfully intercept packets (UP collection); traffic usage reporting, perform QoS handling for user plane (e.g., packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 602 may include an uplink classifier to support routing traffic flows to a data network. The DN 603 may represent various network operator services, Internet access, or third party services. NY 603 may include, or be similar to application server 530 discussed previously.

The AUSF 622 may store data for authentication of UE 601 and handle authentication related functionality. The AUSF 622 may facilitate a common authentication framework for various access types.

The AMF 621 may be responsible for registration management (e.g., for registering UE 601, etc.), connection management, reachability management, mobility management, and lawful interception of AMF-related events, and access authentication and authorization. AMF 621 may provide transport for SM messages between and SMF 624, and act as a transparent proxy for routing SM messages. AMF 621 may also provide transport for short message service (SMS) messages between UE 601 and an SMS function (SMSF) (not shown by Fig. 6). AMF 621 may act as Security Anchor Function (SEA), which may include interaction with the AUSF 622 and the UE 601, receipt of an intermediate key that was established as a result of the UE 601 authentication process. Where USIM based authentication is used, the AMF 621 may retrieve the security material from the AUSF 622. AMF 621 may also include a Security Context Management (SCM) function, which receives a key from the SEA that it uses to derive access-network specific keys. Furthermore, AMF 621 may be a termination point of RAN CP interface (N2 reference point), a termination point of NAS (N1) signalling, and perform NAS ciphering and integrity protection.

AMF 621 may also support NAS signalling with a UE 601 over an N3 interworking-function (IWF) interface. The N3IWF may be used to provide access to untrusted entities. N33IWF may be a termination point for the N2 and N3 interfaces for control plane and user plane, respectively, and as such, may handle N2 signalling from SMF and AMF for PDU sessions and QoS, encapsulate/de-encapsulate packets for IPSec and N3 tunnelling, mark N3 user-plane packets in the uplink, and enforce QoS corresponding to N3 packet marking taking into account QoS requirements associated to such marking received over N2. N3IWF may also relay uplink and downlink control-plane NAS (N1) signalling between the UE 601 and AMF 621, and relay uplink and downlink user-plane packets between the UE 601 and UPF 602. The N3IWF also provides mechanisms for IPsec tunnel establishment with the UE 601.

The SMF 624 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 624 may include the following roaming functionality: handle local enforcement to apply QoS SLAs (VPLMN); charging data collection and charging interface (VPLMN); lawful intercept (in VPLMN for SM events and interface to LI System); support for interaction with external DN for transport of signalling for PDU session authorization/authentication by external DN.

The NEF 623 may provide means for securely exposing the services and capabilities provided by 3GPP network functions for third party, internal exposure/re-exposure, Application Functions (e.g., AF 628), edge computing or fog computing systems, etc. In such embodiments, the NEF 623 may authenticate, authorize, and/or throttle the AFs. NEF 623 may also translate information exchanged with the AF 628and information exchanged with internal network functions. For example, the NEF 623 may translate between an AF-Service-Identifier and an internal 5GC information. NEF 623 may also receive information from other network functions (NFs) based on exposed capabilities of other network functions. This information may be stored at the NEF 623 as structured data, or at a data storage NF using a standardized interfaces. The stored information can then be re-exposed by the NEF 623 to other NFs and AFs, and/or used for other purposes such as analytics.

The NRF 625 may support service discovery functions, receive NF Discovery Requests from NF instances, and provide the information of the discovered NF instances to the NF instances. NRF 625 also maintains information of available NF instances and their supported services.

The PCF 626 may provide policy rules to control plane function(s) to enforce them, and may also support unified policy framework to govern network behaviour. The PCF 626 may also implement a front end (FE) to access subscription information relevant for policy decisions in a UDR of UDM 627.

The UDM 627 may handle subscription-related information to support the network entities' handling of communication sessions, and may store subscription data of UE 601. The UDM 627 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 626. UDM 627 may also support SMS management, wherein an SMS-FE implements the similar application logic as discussed previously.

The AF 628 may provide application influence on traffic routing, access to the Network Capability Exposure (NCE), and interact with the policy framework for policy control. The NCE may be a mechanism that allows the 5GC and AF 628 to provide information to each other via NEF 623, which may be used for edge computing implementations. In such implementations, the network operator and third party services may be hosted close to the UE 601 access point of attachment to achieve an efficient service delivery through the reduced end-to-end latency and load on the transport network. For edge computing implementations, the 5GC may select a UPF 602 close to the UE 601 and execute traffic steering from the UPF 602 to DN 603 via the N6 interface. This may be based on the UE subscription data, UE location, and information provided by the AF 628. In this way, the AF 628 may influence UPF (re)selection and traffic routing. Based on operator deployment, when AF 628 is considered to be a trusted entity, the network operator may permit AF 628 to interact directly with relevant NFs.

As discussed previously, the CN 620 may include an SMSF, which may be responsible for SMS subscription checking and verification, and relaying SM messages to/from the UE 601 to/from other entities, such as an SMS-GMSC/IWMSC/SMS-router. The SMS may also interact with AMF 621 and UDM 627 for notification procedure that the UE 601 is available for SMS transfer (e.g., set a UE not reachable flag, and notifying UDM 627 when UE 601 is available for SMS).

The system 600 may include the following service-based interfaces: Namf: Service-based interface exhibited by AMF; Nsmf: Service-based interface exhibited by SMF; Nnef: Service-based interface exhibited by NEF; Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 600 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an N5 reference point may be between the PCF and the AF; an N7 reference point may be between the PCF and the SMF; an N11 reference point between the AMF and SMF; etc. In some embodiments, the CN 620 may include an Nx interface, which is an inter-CN interface between the MME (e.g., MME 521) and the AMF 621 in order to enable interworking between CN 620 and CN 520.

Although not shown by Fig. 6, system 600 may include multiple RAN nodes 611 wherein an Xn interface is defined between two or more RAN nodes 611 (e.g., gNBs and the like) that connecting to 5GC 620, between a RAN node 611 (e.g., gNB) connecting to 5GC 620 and an eNB (e.g., a RAN node 511 of Fig. 5), and/or between two eNBs connecting to 5GC 620.

In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 601 in a connected mode (e.g., CM-CONNECTED) including functionality to manage the UE mobility for connected mode between one or more RAN nodes 611. The mobility support may include context transfer from an old (source) serving RAN node 611 to new (target) serving RAN node 611; and control of user plane tunnels between old (source) serving RAN node 611 to new (target) serving RAN node 611.

A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signaling PDUs. In other implementations, the Xn-U protocol stack and/or the Xn-C protocol stack may be same or similar to the user plane and/or control plane protocol stack(s) shown and described herein.

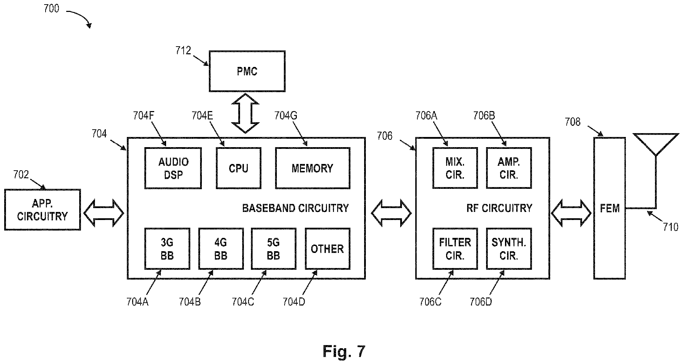

Fig. 7 illustrates example components of a device 700 in accordance with some embodiments. In some embodiments, the device 700 may include application circuitry 702, baseband circuitry 704, Radio Frequency (RF) circuitry 706, front-end module (FEM) circuitry 708, one or more antennas 710, and power management circuitry (PMC) 712 coupled together at least as shown. The components of the illustrated device 700 may be included in a UE or a RAN node. In some embodiments, the device 700 may include less elements (e.g., a RAN node may not utilize application circuitry 702, and instead include a processor/controller to process IP data received from an EPC). In some embodiments, the device 700 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 700. In some embodiments, processors of application circuitry 702 may process IP data packets received from an EPC.

The baseband circuitry 704 may include circuitry such as, but not limited to, one or more single-core or multi-core processors. The baseband circuitry 704 may include one or more baseband processors or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a third generation (3G) baseband processor 704A, a fourth generation (4G) baseband processor 704B, a fifth generation (5G) baseband processor 704C, or other baseband processor(s) 704D for other existing generations, generations in development or to be developed in the future (e.g., second generation (2G), sixth generation (6G), etc.). The baseband circuitry 704 (e.g., one or more of baseband processors 704A-D) may handle various radio control functions that enable communication with one or more radio networks via the RF circuitry 706. In other embodiments, some or all of the functionality of baseband processors 704A-D may be included in modules stored in the memory 704G and executed via a Central Processing Unit (CPU) 704E. The radio control functions may include, but are not limited to, signal modulation/demodulation, encoding/decoding, radio frequency shifting, etc. In some embodiments, modulation/demodulation circuitry of the baseband circuitry 704 may include Fast-Fourier Transform (FFT), precoding, or constellation mapping/demapping functionality. In some embodiments, encoding/decoding circuitry of the baseband circuitry 704 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include one or more audio digital signal processor(s) (DSP) 704F. The audio DSP(s) 704F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry.

RF circuitry 706 may enable communication with wireless networks
using modulated electromagnetic radiation through a non-solid medium. In various embodiments, the RF circuitry 706 may include switches, filters, amplifiers, etc. to facilitate the communication with the wireless network. RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the receive signal path of the RF circuitry 706 may include mixer circuitry 706a, amplifier circuitry 706b and filter circuitry 706c. In some embodiments, the transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c.

In some embodiments, the mixer circuitry 706a of the receive signal path and the mixer circuitry 706a of the transmit signal path may include two or more mixers and may be arranged for quadrature downconversion and upconversion, respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct downconversion and direct upconversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+1 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 710. In various embodiments, the amplification through the transmit or receive signal paths may be done solely in the RF circuitry 706, solely in the FEM 708, or in both the RF circuitry 706 and the FEM 708.

In some embodiments, the FEM circuitry 708 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 710).

In some embodiments, the PMC 712 may manage power provided to the baseband circuitry 704. In particular, the PMC 712 may control power-source selection, voltage scaling, battery charging, or DC-to-DC conversion. The PMC 712 may often be included when the device 700 is capable of being powered by a battery, for example, when the device is included in a UE. The PMC 712 may increase the power conversion efficiency while providing desirable implementation size and heat dissipation characteristics.

While Fig. 7 shows the PMC 712 coupled only with the baseband circuitry 704. However, in other embodiments, the PMC 7 12 may be additionally or alternatively coupled with, and perform similar power management operations for, other components such as, but not limited to, application circuitry 702, RF circuitry 706, or FEM 708.

In some embodiments, the PMC 712 may control, or otherwise be part of, various power saving mechanisms of the device 700. For example, if the device 700 is in an RRC_Connected state, where it is still connected to the RAN node as it expects to receive traffic shortly, then it may enter a state known as Discontinuous Reception Mode (DRX) after a period of inactivity. During this state, the device 700 may power down for brief intervals of time and thus save power.

If there is no data traffic activity for an extended period of time, then the device 700 may transition off to an RRC_Idle state, where it disconnects from the network and does not perform operations such as channel quality feedback, handover, etc. The device 700 goes into a very low power state and it performs paging where again it periodically wakes up to listen to the network and then powers down again. The device 700 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 702 and processors of the baseband circuitry 704 may be used to execute elements of one or more instances of a protocol stack. For example, processors of the baseband circuitry 704, alone or in combination, may be used execute Layer 3, Layer 2, or Layer 1 functionality, while processors of the application circuitry 704 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

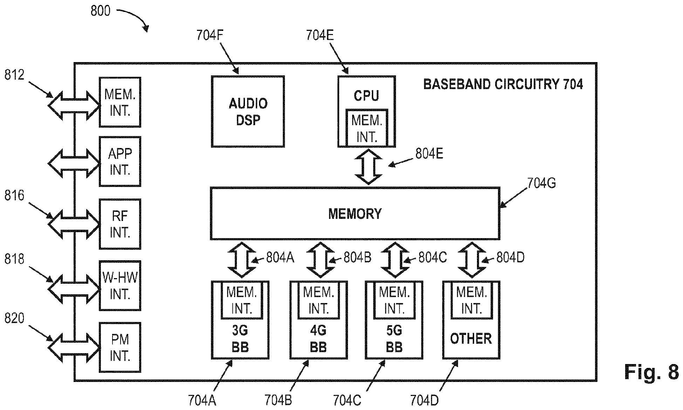

Fig. 8 illustrates example interfaces of baseband circuitry in accordance with some embodiments. As discussed above, the baseband circuitry 704 of Fig. 7 may comprise processors 704A-704E and a memory 704G utilized by said processors. Each of the processors 704A-704E may include a memory interface, 804A-804E, respectively, to send/receive data to/from the memory 704G.

The baseband circuitry 704 may further include one or more interfaces to communicatively couple to other circuitries/devices, such as a memory interface 812 (e.g., an interface to send/receive data to/from memory external to the baseband circuitry 704), an application circuitry interface 814 (e.g., an interface to send/receive data to/from the application circuitry 702 of Fig. 7), an RF circuitry interface 816 (e.g., an interface to send/receive data to/from RF circuitry 706 of Fig. 7), a wireless hardware connectivity interface 818 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 820 (e.g., an interface to send/receive power or control signals to/from the PMC 712.

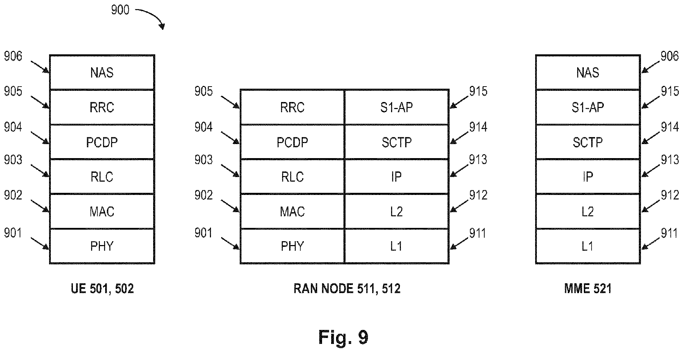

Fig. 9 is an illustration of a control plane protocol stack in accordance with some embodiments. In this embodiment, a control plane 900 is shown as a communications protocol stack between the UE 501 (or alternatively, the UE 502), the RAN node 511 (or alternatively, the RAN node 512), and the MME 521.

The PHY layer 901 may transmit or receive information used by the MAC layer 902 over one or more air interfaces. The PHY layer 901 may further perform link adaptation or adaptive modulation and coding (AMC), power control, cell search (e.g., for initial synchronization and handover purposes), and other measurements used by higher layers, such as the RRC layer 905. The PHY layer 901 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 902 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 903 may operate in a plurality of modes of operation, including: Transparent Mode (TM), Unacknowledged Mode (UM), and Acknowledged Mode (AM). The RLC layer 903 may execute transfer of upper layer protocol data units (PDUs), error correction through automatic repeat request (ARQ) for AM data transfers, and concatenation, segmentation and reassembly of RLC SDUs for UM and AM data transfers. The RLC layer 903 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 904 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 905 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 501 and the RAN node 511 may utilize a Uu interface (e.g., an LTE-Uu interface) to exchange control plane data via a protocol stack comprising the PHY layer 901, the MAC layer 902, the RLC layer 903, the PDCP layer 904, and the RRC layer 905.

The non-access stratum (NAS) protocols 906 form the highest stratum of the control plane between the UE 501 and the MME 521. The NAS protocols 906 support the mobility of the UE 501 and the session management procedures to establish and maintain IP connectivity between the UE 501 and the P-GW 523.

The S1 Application Protocol (S1-AP) layer 915 may support the functions of the S1 interface and comprise Elementary Procedures (EPs). An EP is a unit of interaction between the RAN node 511 and the CN 520. The S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the SCTP/IP layer) 914 may ensure reliable delivery of signaling messages between the RAN node 511 and the MME 521 based, in part, on the IP protocol, supported by the IP layer 913. The L2 layer 912 and the L1 layer 911 may refer to communication links (e.g., wired or wireless) used by the RAN node and the MME to exchange information.

The RAN node 511 and the MME 521 may utilize an S1-MME interface to exchange control plane data via a protocol stack comprising the L1 layer 911, the L2 layer 912, the IP layer 913, the SCTP layer 914, and the S1-AP layer 915.

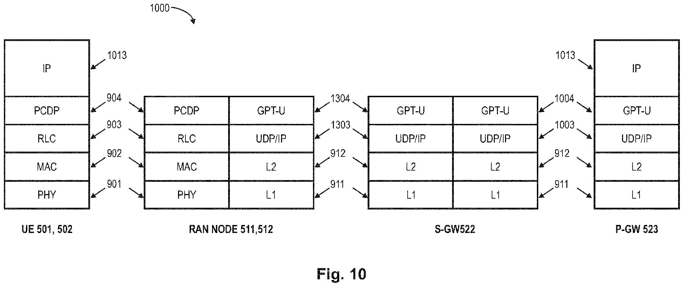

Fig. 10 is an illustration of a user plane protocol stack in accordance with some embodiments. In this embodiment, a user plane 1000 is shown as a communications protocol stack between the UE 501 (or alternatively, the UE 502), the RAN node 511 (or alternatively, the RAN node 512), the S-GW 522, and the P-GW 523. The user plane 1000 may utilize at least some of the same protocol layers as the control plane 900. For example, the UE 501 and the RAN node 511 may utilize a Uu interface (e.g., an LTE-Uu interface) to exchange user plane data via a protocol stack comprising the PHY layer 901, the MAC layer 902, the RLC layer 903, the PDCP layer 904.

The General Packet Radio Service (GPRS) Tunneling Protocol for the user plane (GTP-U) layer 1004 may be used for carrying user data within the GPRS core network and between the radio access network and the core network. The user data transported can be packets in any of IPv4, IPv6, or PPP formats, for example. The UDP and IP security (UDP/IP) layer 1003 may provide checksums for data integrity, port numbers for addressing different functions at the source and destination, and encryption and authentication on the selected data flows. The RAN node 511 and the S-GW 522 may utilize an S1-U interface to exchange user plane data via a protocol stack comprising the L1 layer 911, the L2 layer 912, the UDP/IP layer 1003, and the GTP-U layer 1004. The S-GW 522 and the P-GW 523 may utilize an S5/S8a interface to exchange user plane data via a protocol stack comprising the L1 layer 911, the L2 layer 912, the UDP/IP layer 1003, and the GTP-U layer 1004. As discussed above with respect to Fig. 9, NAS protocols support the mobility of the UE 501 and the session management procedures to establish and maintain IP connectivity between the UE 501 and the P-GW 523.

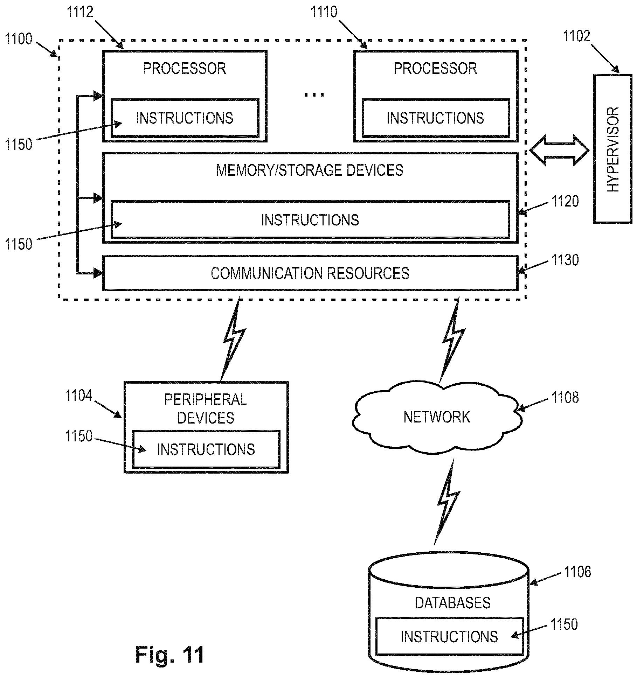

Fig. 11 is a block diagram illustrating components, according to some example embodiments, able to read instructions from a machine-readable or computer-readable medium (e.g., a non-transitory machine-readable storage medium) and perform any one or more of the methodologies discussed herein. Specifically, Fig. 11 shows a diagrammatic representation of hardware resources 1100 including one or more processors (or processor cores) 1110, one or more memory/storage devices 1120, and one or more communication resources 1130, each of which may be communicatively coupled via a bus 1140. For embodiments where node virtualization (e.g., NFV) is utilized, a hypervisor 1102 may be executed to provide an execution environment for one or more network slices/sub-slices to utilize the hardware resources 1100

The processors 1110 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1112 and a processor 1114.

The memory/storage devices 1120 may include main memory, disk storage, or any suitable combination thereof. The memory/storage devices 1120 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1130 may include interconnection or network interface components or other suitable devices to communicate with one or more peripheral devices 1104 or one or more databases 1106 via a network 1108. For example, the communication resources 1130 may include wired communication components (e.g., for coupling via a Universal Serial Bus (USB)), cellular communication components, NFC components, Bluetooth components (e.g., Bluetooth Low Energy), Wi-Fi components, and other communication components.

Instructions 1150 may comprise software, a program, an application, an applet, an app, or other executable code for causing at least any of the processors 1110 to perform any one or more of the methodologies discussed herein. The instructions 1150 may reside, completely or partially, within at least one of the processors 1110 (e.g., within the processor's cache memory), the memory/storage devices 1120, or any suitable combination thereof. Furthermore, any portion of the instructions 1150 may be transferred to the hardware resources 1100 from any combination of the peripheral devices 1104 or the databases 1106. Accordingly, the memory of processors 1110, the memory/storage devices 1120, the peripheral devices 1104, and the databases 1106 are examples of computer-readable and machine-readable media.

In some embodiments, the electronic device(s), network(s), system(s), chip(s) or component(s), or portions or implementations thereof, of any figure herein may be configured to perform one or more processes, techniques, or methods as described herein, or portions thereof.

## Claims

1. A method comprising:
configuring an aperiodic interference measurement, IM, resource of a user equipment, UE (501, 502), wherein the aperiodic IM resource is based on channel state information, CSI,-reference signal, RS, CSI-RS, wherein the CSI-RS is a zero power CSI-RS, ZP CSI-RS, or a non-zero power CSI-RS, NZP CSI-RS,
wherein the UE (501, 502) assumes the same Rx beam to be used for both, interference measurement and channel measurement, and
**characterized in that**
if a time offset between a downlink control information, DCI, triggering the CSI-RS, and the CSI-RS based aperiodic IM resource is smaller than a threshold, the UE (501, 502) applies a default spatial assumption for interference measurement, and if said time offset is larger than certain threshold, the UE (501, 502) applies the Rx beam as indicated for interference measurement.

2. The method according to claim 1, further comprising receiving at the UE (501, 502) the NZP CSI-RS on the configured aperiodic IM resource for interference measurement.

3. The method of claim 1 or 2, wherein the IM resource configuration indicates the IM resource position in both time domain and frequency domain.

4. The method of claim 2, wherein the IM resource configuration indicates over which OFDM symbol or symbols the IM resource is transmitted.

5. The method of claim 2 or 3, wherein the IM resource configuration indicates, in frequency domain, a frequency offset of the IM resource within one physical resource block, PRB.

6. The method of claim 4, wherein a resource element, RE, pattern of the IM resource is either (4, 1) or (2, 2), indicating that the IM resource has either 4 RE in the frequency domain within 1 OFDM symbol, or has 2 Res in each of 2 OFDM symbols.

7. The method of one of claims 1 to 6, further comprising receiving, at the UE (501, 502), a CSI-RS on the configured IM resource.

8. The method of one of claims 1 to 7, further comprising receiving, at the UE (501, 502), higher layer signaling configuring the IM resource.

9. The method of claim 8, wherein the higher layer signaling is Radio Resource Control, RRC, signaling.

10. An apparatus for use in a user equipment, UE (501, 502), the apparatus being configured to perform the method according to one of claims 1 to 9.

11. A computer-readable media comprising instructions to cause an electronic device, upon execution of the instructions by one or more processors of the electronic device, to perform the method according to one of claims 1 to 9.

## Patentansprüche

1. Verfahren, umfassend:
Konfigurieren einer Ressource einer aperiodischen Interferenzmessung, IM, eines Benutzergeräts, UE (501, 502), wobei die aperiodische IM-Ressource auf einem Kanalzustandsinformations-, CSI,-Referenzsignal-, RS, CSI-RS basiert, wobei das CSI-RS ein Nullleistungs-CSI-RS, ZP CSI-RS, oder ein Nicht-Nullleistungs-CSI-RS, NZP CSI-RS, ist, wobei das UE (501, 502) denselben Rx-Strahl annimmt, der sowohl für die Interferenzmessung als auch für die Kanalmessung verwendet werden soll, und
**dadurch gekennzeichnet, dass**
wenn ein Zeitversatz zwischen einer Downlink-Steuerinformation, DCI, die die CSIRS auslöst, und der CSI-RS-basierten aperiodischen IM-Ressource kleiner als ein Schwellenwert ist, das UE (501, 502) eine räumliche Standardannahme für die Interferenzmessung anwendet, und wenn der Zeitversatz größer als ein bestimmter Schwellenwert ist, das UE (501, 502) den Rx-Strahl wie für die Interferenzmessung angegeben anwendet.

2. Verfahren nach Anspruch 1, ferner umfassend Empfangen, an dem UE (501, 502), des NZP CSI-RS auf der konfigurierten aperiodischen IM-Ressource für die Interferenzmessung.

3. Verfahren nach Anspruch 1 oder 2, wobei die IM-Ressourcenkonfiguration die IM-Ressourcenposition sowohl im Zeitbereich als auch im Frequenzbereich angibt.

4. Verfahren nach Anspruch 2, wobei die IM-Ressourcenkonfiguration angibt, über welches OFDM-Symbol oder welche OFDM-Symbole die IM-Ressource übertragen wird.

5. Verfahren nach Anspruch 2 oder 3, wobei die IM-Ressourcenkonfiguration im Frequenzbereich einen Frequenzversatz der IM-Ressource innerhalb eines physikalischen Ressourcenblocks, PRB, angibt.

6. Verfahren nach Anspruch 4, wobei ein Ressourcenelement-, RE-, Muster der IM-Ressource entweder (4, 1) oder (2, 2) ist, was angibt, dass die IM-Ressource entweder 4 RE im Frequenzbereich innerhalb von 1 OFDM-Symbol oder 2 Res in jedem von 2 OFDM-Symbolen aufweist.

7. Verfahren nach einem der Ansprüche 1 bis 6, ferner umfassend Empfangen, an dem UE (501, 502), eines CSI-RS auf der konfigurierten IM-Ressource.

8. Verfahren nach einem der Ansprüche 1 bis 7, ferner umfassend Empfangen, an dem UE (501, 502), einer Signalisierung höherer Schicht, die die IM-Ressource konfiguriert.

9. Verfahren nach Anspruch 8, wobei die Signalisierung höherer Schicht eine Funkressourcensteuerungs-, RRC-, Signalisierung ist.

10. Vorrichtung zur Verwendung in einem Benutzergerät, UE (501, 502), wobei die Vorrichtung konfiguriert ist, um das Verfahren nach einem der Ansprüche 1 bis 9 durchzuführen.

11. Computerlesbares Medium, umfassend Anweisungen, um eine elektronische Vorrichtung bei Ausführung der Anweisungen durch einen oder mehrere Prozessoren der elektronischen Vorrichtung zu veranlassen, das Verfahren nach einem der Ansprüche 1 bis 9 durchzuführen.

## Revendications

1. Un procédé comprenant :
la configuration d'une ressource de mesure d'interférence, IM, apériodique d'un équipement utilisateur, UE (501, 502), la ressource IM apériodique étant basée sur un signal de référence, RS, d'information d'état de canal, CSI, CSI-RS, le CSI-RS étant un CSI-RS à puissance nulle, ZP CSI-RS, ou un CSI-RS à puissance non nulle, NZP CSI-RS,
dans lequel l'UE (501, 502) suppose qu'il y a lieu d'utiliser le même faisceau Rx à la fois pour la mesure d'interférence et la mesure de canal, et
**caractérisé en ce que**
si un décalage temporel entre un déclenchement d'information de contrôle de liaison descendante, DCI, déclenchant le CSI-RS et la ressource IM apériodique basée sur le CSI-RS est inférieur à un seuil, l'UE (501, 502) applique pour la mesure d'interférence une supposition spatiale par défaut, et si ledit décalage temporel est supérieur à un certain seuil, l'UE (501, 502) applique pour la mesure d'interférence le faisceau Rx de la manière indiquée.

2. Le procédé selon la revendication 1, comprenant en outre la réception sur l'UE (501, 502) du NZP CSI-RS sur la ressource IM apériodique configurée pour la mesure d'interférence.

3. Le procédé de la revendication 1 ou 2, dans lequel la configuration de ressource IM indique la position de la ressource IM à la fois dans le domaine temporel et dans le domaine fréquentiel.

4. Le procédé de la revendication 2, dans lequel la configuration de ressource IM indique sur quel symbole ou symboles OFDM la ressource IM est transmise.

5. Le procédé de la revendication 2 ou 3, dans lequel la configuration de ressource IM indique, dans le domaine fréquentiel, un décalage en fréquence de la ressource IM au sein d'un même bloc de ressource physique, PRB.

6. Le procédé de la revendication 4, dans lequel un profil d'élément de ressource, RE, de la ressource IM est soit (4,1) soit (2,2), indiquant que la ressource IM possède soit 4 RE dans le domaine fréquentiel au sein d'1 symbole OFDM, ou possède 2 RE dans chacun de 2 symboles OFDM.

7. Le procédé de l'une des revendications 1 à 6, comprenant en outre la réception sur l'UE (501, 502) d'un CSI-RS sur la ressource IM configurée.

8. Le procédé de l'une des revendications 1 à 7, comprenant en outre la réception sur l'UE (501, 502) d'une signalisation de couche supérieure configurant la ressource IM.

9. Le procédé de la revendication 8, dans lequel la signalisation de couche supérieure est une signalisation de contrôle de ressource radio, RRC.

10. Un appareil destiné à être utilisé dans un équipement utilisateur, UE (501, 502), l'appareil étant configuré pour mettre en oeuvre le procédé selon l'une des revendications 1 à 9.

11. Un support lisible par calculateur comprenant des instructions pour faire en sorte qu'un dispositif électronique, à l'exécution des instructions par un ou plusieurs processeurs du dispositif électronique, mette en oeuvre le procédé selon l'une des revendications 1 à 9.
